# EUROPÄISCHE PATENTSCHRIFT

(11) **EP 0 292 905 B1**
(45) Veröffentlichungstag und Bekanntmachung des Hinweises auf die Patenterteilung: **06.10.1993**
(21) Anmeldenummer: 88108198.8
(22) Anmeldetag: 21.05.1988
(51) Int. Cl.: C09D 5/24, C09D 187/00, H01B 1/12

(54) **Elektrisch leitende Beschichtungsmasse, Verfahren zu ihrer Herstellung und ihre Verwendung**
Electrically conductive coating composition, method for its manufacture and its use
Masse de revêtement électroconductrice, son procédé de préparation et son utilisation

(30) Priorität: 26.05.1987 DE 3717668
(43) Veröffentlichungstag der Anmeldung: 30.11.1988
(73) Patentinhaber: HOECHST AKTIENGESELLSCHAFT, 65926 Frankfurt am Main (DE)
(72) Erfinder: Kämpf, Günther, Dr., D-6227 Oestrich-Winkel (DE); Feldhues, Michael, Dr., D-6232 Bad Soden am Taunus (DE)

(56) Entgegenhaltungen:
- EP-A- 0 203 438
- EP-A- 0 253 594
- PATENT ABSTRACTS OF JAPAN, Band 010, Nr. 203 (C-360), 16. Juli 1986; & JP-A-61 044 921 (AGENCY OF IND. SCIENCE & TECHNOL) 04-03-1986

## Beschreibung

Die Erfindung bezieht sich auf eine elektrisch leitende Beschichtungsmasse, welche elektrostatische Aufladung von Oberflächen zu verhindern vermag, ein Verfahren zu ihrer Herstellung und ihre Verwendung.

Üblicherweise müssen Verpackungen aus sehr gut isolierenden Kunststoffen aus Gründen der Arbeitssicherheit wie beispielsweise Explosionsschutz, mit einer antistatischen Ausrüstung versehen werden. Dabei sind transparente leitfähige Folien besonders erwünscht, weil eine Identifikation des Inhalts möglich ist.

Auch bei anderen Verwendungen führt die hohe elektrostatische Aufladbarkeit der üblichen Kunststoffe zu Schwierigkeiten:
- schlechtes Aufwickelverhalten von Kalanderfolien und Fasern.
- Aneinanderhaften von Folienbahnen beim Verarbeiten und auf Abfüllanlagen.
- Funkenbildung beim Entleeren von Kunststoffgebinden kann in Gegenwart von explosiven Gas-Luftgemischen (beispielsweise Lösemitteln) zu gefährlichen Explosionen führen.
- Bedruckbarkeit von Kunststoffteilen wird gestört.
- Beim Lagern ziehen Kunststoffteile Staub an und verschmutzen.
- Bei der Verpackung empfindlicher elektronischer Bauteile werden diese durch elektrostatische Aufladung beim Auspacken zerstört.
- Photographische Filme und Röntgenfilme können durch elektrostatische Aufladungen durch sogenanntes "Verblitzen" unbrauchbar gemacht werden.

Zur Abführung der Ladungen von der Kunststoffoberfläche gibt es mehrere Möglichkeiten:
a) Compounds aus Kunststoffen und Ruß oder einem Metallpulver oder Metallfasern. Da sie erst wirksam werden, wenn sich die leitfähigen Teilchen berühren (Percolation), sind hohe Zugabemengen an leitfähigen Material notwendig (typisch 5 % bis 30 %). Dadurch wird das typische Eigenschaftsbild des Kunststoffs stark verändert, seine mechanischen Eigenschaften werden deutlich schlechter und und die optischen Eigenschaften wie Transparenz und Farbe total verändert.
b) Durch eine intensive Corona-Entladung lassen sich bei manchen Kunststoffen die Oberflächen soweit verändern, daß keine elektrostatische Aufladung mehr eintritt. Leider läßt die Wirkung schon nach kurzer Zeit nach, so daß diese Methode für Langzeitanwendung nicht verwendbar ist und oft nur eingesetzt wird, um die Beschichtbarkeit zu verbessern.
c) Durch die Zugabe von Antistatika auf die Kunststoffoberfläche, z.B. durch Tauchen, Tränken oder Besprühen werden leitfähige Oberflächen erzeugt. Man kann diese Antistatika aber auch in das Volumen des Kunststoffs einbringen und so eine dauerhafte Wirkung erzielen. In beiden Fällen ist von großem Nachteil, daß der Oberflächenwiderstand der so behandelten Kunststoffe stark von der Luftfeuchtigkeit abhängt; insbesondere, wenn die Materialien sehr geringer Feuchte ausgesetzt werden, nimmt ihre Wirksamkeit schnell ab.
d) Kunststoffe können mit Metallen oder anorganischen Halbleitern im Vakuum oder nach dem Sputter-Verfahren bedampft werden. Diese Metallschichten müssen sehr dünn aufgebracht werden, wenn eine ausreichende Transparenz verlangt wird. Infolgedessen sind diese Schichten sehr empfindlich und müßten durch zusätzliche Schichten gegen mechanische und chemische Beschädigung geschützt werden. Dieses Verfahren ist kompliziert, aufwendig und teuer. Die Auswahl der verwendbaren Materialien ist zudem noch durch Anfälligkeit gegen Korrosion begrenzt. Auf Kunststoffolien aufgedampfte Metallschichten zeigen außerdem oft eine schlechte Schichthaftung, die durch zusätzliche Prozeß-Schritte, wie z.B. die oben erwähnte Corona-Behandlung, verbessert werden muß. Bei diesen mehrlagigen Folien-Systemen ist die Metallschicht noch durch eine dielektrische Schicht nach außen gegen mechanische Beschädigung geschützt, deren Schichtdicke wiederum sehr genau eingehalten werden muß, um den gewünschten Oberflächenwiderstand zu erreichen. Zusammen mit einer herkömmlichen antistatischen Schicht auf der Folien-Innenseite kann es auch zu einem Speichereffekt für die elektrischen Ladungen kommen, wodurch das Verhindern elektrostatischer Aufladungen nur ungenügend gelöst wird. Solche Produkte eignen sich deshalb nur zur Abschirmung gegen äußere Felder (Faraday-Käfig).

Aufgabe der vorliegenden Erfindung ist es daher, elektrisch leitfähige Schichten herzustellen, die die obengenannten Nachteile nicht aufweisen und zudem einfach auf beliebige Oberflächen aufgebracht werden können.

Es wurde gefunden, daß eine Beschichtungsmasse bestehend aus einem löslichen Oligomer von substituierten Thiophenen und einem löslichen Polymer eine gut haftende elektrisch leitende Schicht auf verschiedenen Substraten ergeben kann.

Somit betrifft die Erfindung eine elektrisch leitende Beschichtungsmasse, bestehend aus 10 bis 90 Gew.-% eines Oligomeren mit drei bis zehn Struktureinheiten, die durch Verknüpfung in 2-Stellung und/oder 5-Stellung miteinander verbunden sind, im statistischen Mittel bestehend aus 60 bis 100 Gew.-% Struktureinheiten, die sich von mindestens einem Monomeren der Formel (I) ableiten 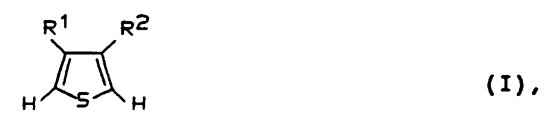
worin
R¹ eine C₁-C₁₂-Alkoxygruppe oder -O(CH₂CH₂O)ₙCH₃ mit n = 1 bis 4 und
R² ein Wasserstoffatom, eine C₁-C₁₂-Alkylgruppe, eine C₁-C₁₂-Alkoxygruppe oder -O(CH₂CH₂O)ₙCH₃ mit n = 1 bis 4 bedeuten,
oder R¹ zusammen mit R² - O(CH₂)ₘ-CH₂- oder -O(CH₂)ₘ-O-, worin m = 1 bis 12 ist, darstellt,
0 bis 40 Gew.-% Struktureinheiten, die sich von mindestens einem Monomeren der Formel (II) ableiten 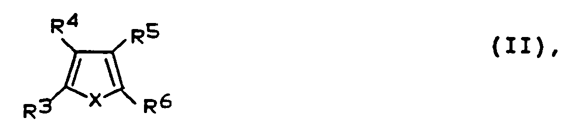
worin R⁴ und R⁵ unabhängig voneinander ein Wasserstoffatom, ein Halogenatom, eine C₁-C₁₂-Alkylgruppe oder Aryl bedeuten oder zusammen mit den sie verbindenden C-Atomen einen aromatischen Ring bilden,
R³ und R⁶ unabhängig voneinander ein Wasserstoffatom bedeuten oder R³ zusammen mit R⁴ und den sie verbindenden C-Atomen oder R⁵ zusammen mit R⁶ und den sie verbindenden C-Atomen jeweils einen aromatischen Ring bilden,
X ein Sauerstoffatom, ein Schwefelatom, eine =NH-Gruppe, eine =N-Alkylgruppe oder eine =N-Arylgruppe bedeutet,
0 bis 40 Gew.-% Struktureinheiten, die sich von mindestens einem Monomeren der Formel (III) ableiten 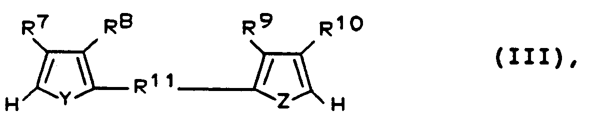
worin R⁷, R⁸, R⁹ und R¹⁰ unabhängig voneinander ein Wasserstoffatom, eine C₁-C₁₂-Alkylgruppe, eine C₁-C₁₂-Alkoxygruppe oder eine Arylgruppe bedeuten,
Y und Z unabhängig von einander ein Sauerstoffatom, ein Schwefelatom, eine =NH-Gruppe, eine =N-Alkylgruppe oder =N-Arylgruppe bedeuten,
R¹¹ eine Arylengruppe, eine Heteroarylengruppe oder ein konjugiertes System der Formel 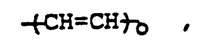
worin o null, 1, 2 oder 3 ist, bedeutet,
0 bis 40 Gew.-% Struktureinheiten, die sich von mindestens einem Monomeren der Formel (IV) ableiten 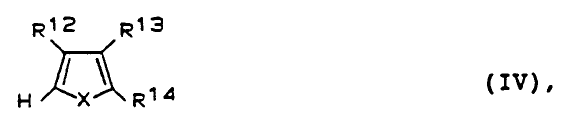
worin R¹² und R¹³ unabhängig voneinander ein Wasserstoffatom, ein Halogenatom, eine C₁-C₁₂-Alkylgruppe, eine C₁-C₁₂-Alkoxygruppe, eine C₁-C₄-Alkylaminogruppe oder eine C₁-C₄-Acylaminogruppe,
R¹⁴ ein Halogenatom, eine C₁-C₁₂-Alkylgruppe, eine C₁-C₁₂-Alkoxygruppe, eine C₁-C₄-Alkylaminogruppe oder eine C₁-C₄-Acylaminogruppe bedeuten und X die oben angegebene Bedeutung hat,
wobei das Oligomere in der oxidierten Form in dipolar aprotischen Lösungsmitteln bei 25°C vollständig löslich ist und Lösungen mit einem Gehalt von mindestens 0,5 g des Oligomeren in 100 ml Lösungsmittel bei 25°C erhalten werden, und
10 bis 90 Gew.-% eines Polymeren, welches in Lösemitteln oder Lösemittelgemischen mit einem δ_{P}-Wert von größer 3,5 (cal/ccm)^{½} und einem δ_{H}-Wert von kleiner 6,5 (cal/ccm)^{½} löslich oder quellbar ist.

Weiterhin betrifft die Erfindung auch ein Verfahren zur Herstellung der genannten Beschichtungsmasse, dadurch gekennzeichnet, daß man Oligomeres und Polymeres gemeinsam in einem Lösemittel oder Lösemittelgemisch mit einem δ_{P}-Wert größer 3,5 (cal/ccm)^{½} und einem δ_{H}-Wert kleiner 6,5 (cal/ccm)^{½} löst oder quellen läßt und das Gemisch aus dem Lösemittel zurückgewinnt.

Schließlich betrifft die Erfindung die Verwendung dieser Beschichtungsmasse für die Herstellung elektrisch leitender Schichten auf nicht leitenden oder halbleitenden Materialien.

Die erfindungsgemäße Beschichtungsmasse besteht aus einem Oligomer und einem Polymer.

Das Oligomer enthält Struktureinheiten, welche sich durch Verknüpfung in 2-Stellung und/oder 5-Stellung von mindestens einem Monomeren der Formel (I) ableiten 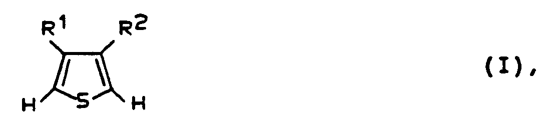
worin
R¹ eine C₁-C₁₂-, vorzugsweise C₁-C₄-, insbesondere C₁-C₂-Alkoxygruppe oder -O(CH₂CH₂O)ₙCH₃ mit n = 1 bis 4, vorzugsweise 1 oder 2, bedeutet und
R² ein Wasserstoffatom, eine C₁-C₁₂-, vorzugsweise C₁-C₄-Alkoxygruppe, insbesondere C₁-C₂-Alkoxygruppe, eine C₁-C₁₂-, vorzugsweise C₁-C₄-Alkylgruppe oder -O(CH₂CH₂O)ₙCH₃ mit n = 1 bis 4, vorzugsweise 1 oder 2, bedeutet oder R¹ zusammen mit R² -O(CH₂)ₘ-CH₂- oder -O(CH₂)ₘ-O- mit m = 1 bis 12, vorzugsweise 1 bis 4, darstellt.

Beispiele für Vertreter der Formel (I) sind 3-Methoxythiophen, 3-Ethoxythiophen, 3-Propoxythiophen, 3-Methoxy-4-methylthiophen, 3-Methoxy-4-ethylthiophen, 3-Methoxy-4-butylthiophen, 3-Ethoxy-4-methylthiophen, 3-Ethoxy-4-ethylthiophen, 3,4-Dimethoxythiophen, 3-Ethoxy-4-methoxythiophen, 3-Butoxy-4-methoxythiophen, 3-(Methoxyethoxy)thiophen, 3-(Methoxyethoxyethoxy)thiophen, 3,4-(Ethylen-1,2-dioxy)thiophen und 3,4-(Prop-3-ylen-1-oxy)thiophen. Auch Gemische der Monomeren (I) können eingesetzt werden.

Als Comonomere für die Monomeren (I) kommen alle Aromaten und Heteroaromaten in Frage, die elektrisch leitende Polymere bilden können und mit den Monomeren (I) copolymerisierbar sind. Beispielsweise seien hier genannt Verbindungen der Formel (II) 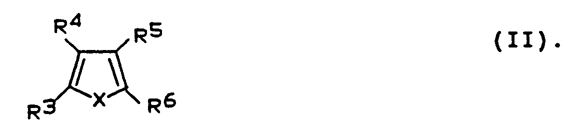
R⁴ und R⁵ sind unabhängig voneinander ein Wasserstoffatom, ein Halogenatom, eine C₁-C₁₂-, vorzugsweise C₁-C₄-Alkylgruppe, eine Arylgruppe, vorzugsweise Phenyl oder Thienyl, oder bilden zusammen mit den sie verbindenden C-Atomen einen aromatischen Ring, vorzugsweise einen Benzol-, Thiophen- oder Pyrrolring.

R³ und R⁶ sind unabhängig voneinander ein Wasserstoffatom oder bilden jeweils mit R⁴ oder R⁵ zusammen mit den sie verbindenden C-Atomen einen aromatischen Ring, vorzugsweise einen Benzol-, Thiophen- oder Pyrrolring.

X bedeutet ein O-Atom, ein S-Atom, eine =NH-Gruppe, eine =N-Alkylgruppe, vorzugsweise =N-C₁-C₄-Alkyl, oder N-Aryl, vorzugsweise N-Phenyl.

Geeignet sind Pyrrol, 3-Chlorpyrrol, 3-Methylpyrrol, 3,4-Dimethylpyrrol, N-Methylpyrrol, Thieno[3,2-b]pyrrol, Carbazol, Thiophen, 3-Methylthiophen, 3-Octylthiophen, 3,4-Dimethylthiophen, 3,4-Diethylthiophen, Isothianaphthen und Thieno[2,3-b]thiophen, Dithieno[3,2-b;2′,3′-d]thiophen, Dibenzothiophen, vorzugsweise Pyrrol und 3-Methylthiophen.

Weiterhin kommen als Comonomere für Monomere (I) solche der Formel (III) in Betracht: 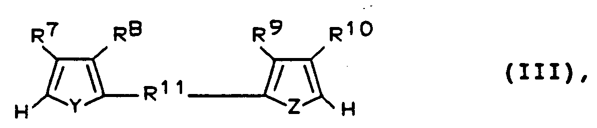
R⁷, R⁸, R⁹ und R¹⁰ sind unabhängig voneinander ein Wasserstoffatom, eine C₁-C₁₂-, vorzugsweise C₁-C₄-Alkylgruppe, eine C₁-C₁₂-Alkoxygruppe, vorzugsweise C₁-C₄-Alkoxy, oder eine Arylgruppe, vorzugsweise Phenyl oder Thienyl. Y und Z bedeuten unabhängig voneinander ein O-Atom, ein S-Atom, eine =NH-Gruppe, eine =N-Alkylgruppe, vorzugsweise =N-C₁-C₄-Alkyl, oder eine =N-Arylgruppe, vorzugsweise =N-Phenyl. R¹¹ steht für Arylen, vorzugsweise Phenylen, Heteroarylen, vorzugsweise Thienylen, Furanylen, Pyrrolylen oder ein konjugiertes System der Formel 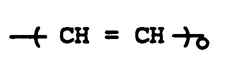
mit o = 0, 1, 2 oder 3.

Geeignet sind insbesondere 1,2-Di=(2-thienyl)ethen, 1,2-Di-(3-methylthien-2-yl)ethen, 1,2-Di-(2-furanyl)ethen, 1-(2-Furanyl)-2-(2-(thienyl)ethen, 1-(2-Pyrrolyl)-2-(2-thienyl)ethen, 1,4-Di-(2-thienyl)-buta-1,3-dien, 1,4-Di-(2-furanyl)-buta-1,3-dien, 1,4-Di-(2-thienyl)benzol, Terthienyl (2,5-Di-(2-thienyl)thiophen), 2,5-Di-(2-thienyl)-pyrrol, 2,2′-Bithiophen, 3,3′-Dimethyl-2,2′-bithiophen, 3,3′-Dimethoxy-2,2′-bithiophen, 3,4′-Dimethoxy-2,2′-bithiophen, 4,4′-Dimethoxy-2,2′-bithiophen.

Die vorstehenden Comonomeren (II) und (III) können auch in Mischung untereinander verwendet werden. Die Herstellung der Verbindungen (II) und (III) ist aus dem Stand der Technik bekannt.

Die Oligomeren enthalten drei bis zehn Struktureinheiten, vorzugsweise vier bis neun Struktureinheiten und insbesondere fünf oder sechs Struktureinheiten. Die Menge dieser Struktureinheiten die sich von mindestens einem Monomeren der Formel (I) ableiten,beträgt im statistischen Mittel 60 bis 100 Gew.-%, vorzugsweise 90 bis 100 Gew.-% und insbesondere 95 bis 100 Gew.-%, bezogen auf die im undotierten Oligomeren vorhandenen Struktureinheiten.

Die Menge der Struktureinheiten, die sich von Monomeren der Formel (II) ableiten, beträgt im statistischen Mittel 0 bis 40, vorzugsweise 0 bis 10 Gew.-%, die sich von Monomeren der Formel (III) ableitenden Struktureinheiten sind im statistischen Mittel zu 0 bis 40, vorzugsweise 0 bis 10 Gew.-% vorhanden.

Weiterhin können die Endgruppen der Oligomeren von Struktureinheiten der Monomeren (IV) gebildet werden, welche zur Modifizierung des Polymerisationsgrades und der physikalischen Eigenschaften zu den Monomeren der allgemeinen Formel (I) zugesetzt werden können. 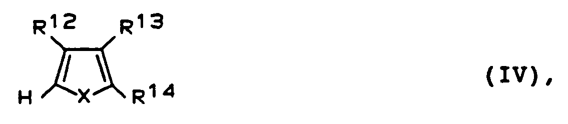
R¹² und R¹³ sind unabhängig voneinander ein Wasserstoffatom, ein Halogenatom, vorzugsweise Chlor oder Brom, eine C₁-C₁₂-, vorzugsweise C₁-C₄-Alkylgruppe, eine C₁-C₁₂-, vorzugsweise C₁-C₄-Alkoxygruppe, eine C₁-C₄-Alkylaminogruppe oder eine C₁-C₄-Acylaminogruppe, vorzugsweise Acetylamino.

R¹⁴ ist ein Halogenatom, eine C₁-C₁₂-, vorzugsweise C₁-C₄-Alkylgruppe, eine C₁-C₁₂-, vorzugsweise C₁-C₄-Alkoxygruppe, eine C₁-C₄-Alkylaminogruppe oder eine C₁-C₄-Acylaminogruppe, vorzugsweise Acetylamino.
X hat die oben angegebene Bedeutung.

Beispiele für Verbindungen der Formel (IV) sind 2-Methoxythiophen, 2-Methylthiophen, 2-Bromthiophen, 2-Chlorthiophen, 2-Acetylaminothiophen, 2-Brom-3-methoxythiophen, 2-Brom-4-methoxythiophen, 2-Chlor-3-methylthiophen, 2,3-Dimethoxythiophen, 2,4-Dimethoxythiophen, 2,3-Dimethylthiophen, 3-Methoxy-2-methylthiophen, 2-Methoxy-3-methylthiophen und 4-Methoxy-2-methylthiophen, 2-Chlor-4-methoxythiophen, 2-Acetylamino-3-methoxythiophen, 2-Methylpyrrol, 2-Brompyrrol, 2-Chlorpyrrol, 2-Methylfuran, 2-Methoxyfuran. Aufgrund der Substitution in der 2-Stellung wirken diese Verbindungen kettenabbrechend. Die Menge an (IV) beträgt in der Regel 0 bis 40 Gew.-%, vorzugsweise weniger als 10 Gew.-% und insbesondere weniger als 5 Gew.-%, bezogen auf die Gesamtmenge an Monomeren.

Die löslichen, elektrisch leitenden Oligomeren enthalten in der oxidierten Form zur Kompensation der positiven Ladungen eine entsprechende Zahl von Anionen. Dabei handelt es sich vorzugsweise um die Anionen des Leitsalzes, das beim Herstellungsverfahren eingesetzt wurde. Als Beispiele für geeignete Anionen seien hier genannt: BF₄⁻, PF₆⁻, SbF₆⁻, SbCl₆⁻, FeCl₄⁻, Fe[(CN)₆]³⁻, F⁻, Cl⁻, Br⁻, SCN⁻, SO₄²⁻, HSO₄⁻, PO₄³⁻, Alkyl-SO₃⁻, Perfluoralkyl-SO₃⁻, Aryl-SO₃⁻, Alkyl-CO₂⁻, Perfluoralkyl-CO₂⁻, Aryl-CO₂⁻, Phenolat. Unter Verlust der thermischen Stabilität kommen auch ClO₄⁻ und NO₃⁻ in Frage. Bevorzugt sind BF₄⁻, PF₆⁻ und CF₃SO₃⁻. Es können auch Gemische der oben genannten in das Oligomere eingebrachten Anionen vorliegen. Die Zahl dieser Anionen, bezogen auf die Zahl der Monomereinheiten, beträgt zumeist 10 bis 30 %, vorzugsweise 15 bis 20 %.

Das Oligomer und seine Herstellung sind Gegenstand der Patentanmeldung DE OS 37 17 669.

Das in der erfindungsgemäßen Beschichtungsmasse ebenfalls enthaltene Polymere soll löslich oder quellbar sein in Lösemitteln oder Lösemittelgemischen mit einem δ_{P}-Wert (delta_{P}-Wert) größer 3,5, vorzugsweise größer 5,5 (cal/ccm)^{½} und einem δ_{H}-Wert (delta_{H}-Wert) kleiner 6,5, vorzugsweise kleiner 5,0 (cal/ccm)^{½}.

Geeignete Polymere sind Poly-vinylacetal, Poly-vinylacetat, Poly-maleinsäureanhydrid, Poly-N-vinylpyrrolidon, Poly-4-vinylpyridin, Poly-methylmethacrylat, Poly-ethylmethacrylat, Poly-acrolein, Poly-formaldehyd, Poly-ethylenoxid, Polypropylenoxid, Celluloseacetat, Styrol-Acrylnitril-Copolymere, Poly-acrylnitril, Poly-methacrylnitril, Poly-vinylchlorid, Poly-vinylidenfluorid, Poly-N-vinylcarbazol, Poly-N-vinylacetamid, Poly-acrylsäureanhydrid, Poly-ethylencarbonat, Poly-ε-caprolactam sowie weitere Polymere oder Copolymere.

Bevorzugt werden Poly-methylmethacrylat, Styrol-Acrylnitril-Copolymere und Polyvinylacetal.

Neben dem Oligomer und dem Polymer kann die erfindungsgemäße Beschichtungsmasse noch weitere Zusatzstoffe wie beispielsweise Stabilisatoren, Weichmacher, Pigmente, Mattierungsmittel, Gleitmittel und andere Additive enthalten.

Die Beschichtungsmasse enthält 10 bis 90, vorzugsweise 30 bis 90 Gew.-%, bezogen auf die Gesamtmenge, Oligomer und 10 bis 90, vorzugsweise 10 bis 70 Gew.-%, bezogen auf die Gesamtmenge, Polymer. Weitere Zusatzstoffe werden, falls erforderlich, zusätzlich hinzugefügt.

Als Lösemittel oder Quellmittel für das Oligomer und das Polymer dienen dipolar aprotische Lösemittel mit einem δ_{P}-Wert größer 3,5, vorzugsweise größer 5,5 (cal/ccm)^{½} und einem δ_{H}-Wert kleiner 6,5, vorzugsweise kleiner 5,0 (cal/ccm)^{½}. Die δ-Werte sind aufgeführt in A.F. Barton, Handbook of Solubility Parameters and other Cohesion Parameters, CRC Press 1983, Seite 153-161.

Geeignet sind beispielsweise Aceton, Acetonitril, Propionitril, Nitromethan, Benzaldehyd, Benzonitril, γ-Butyrolacton, ε-Caprolacton, Diethylsulfat, Crotonaldehyd, Cyanessigsäuremethylester, Furfural, Triethylphosphat, N,N-Dimethylformamid, Dimethylsulfoxid, 3-Methoxypropionitril, N-Methylpyrrolidon, Nitrobenzol, Nitromethan, Nitroethan, Propylencarbonat, Schwefeldioxid (-10°C), Sulfolan.

Bevorzugt verwendet werden Acetonitril, Acrylnitril, Benzonitril, γ-Butyrolacton, Diethylsulfat, Furfural, N-Methylpyrrolidon, Nitropropan, Propionitril, Propylencarbonat, Triethylphosphat. Nachstehend die δ-Werte einiger bevorzugter Lösemittel:

| | δ_{P} | δ_{H} |
|---|---|---|
| Furfural | 7,45 | 2,55 |
| Propylencarbonat | 9,0 | 2,05 |
| γ-Butyrolacton | 8,3 | 3,7 |
| Diethylsulfat | 7,35 | 3,6 |
| Triethylphosphat | 5,75 | 4,6 |
| Acetonitril | 9,0 | 3,05 |
| Acrylnitril | 8,7 | 3,4 |
| Propionitril | 7,15 | 2,75 |
| Nitromethan | 9,4 | 2,55 |
| Nitropropan | 6,05 | 2,05 |
| N-Methyl-pyrrolidon | 6,15 | 3,6 |

Zur Herstellung der erfindungsgemäßen Beschichtungsmasse werden Oligomer und Polymer zusammen in dem Lösemittel gelöst oder gequollen. Dies geschieht bei einer Temperatur zwischen Schmelz- und Siedepunkt des eingesetzten Lösemittels oder Lösemittelgemisches, vorzugsweise im Bereich von 0°C bis 80°C, insbesondere von 20 bis 60°C, gegebenenfalls unter Rühren oder anderen Mischtechniken. Die Gesamtkonzentration der beiden Partner im Lösemittel beträgt 0,1 bis 20, vorzugsweise 0,5 bis 10 Gew.-%. Bei Bedarf werden danach die übrigen Zusatzstoffe hinzugefügt.

Durch Variation der Mengenverhältnisse von Oligomer zu Polymer können die Eigenschaften der Beschichtungsmasse, wie Oberflächenwiderstand der Beschichtung, spezifischer Widerstand, Filmbildung, und die mechanischen Eigenschaften der Beschichtung, wie Transparenz, Abriebfestigkeit, Resistenz gegen organische und anorganische Flüssigkeiten, den Anforderungen angepaßt werden.

Aus der Lösung oder Suspension kann die Beschichtungsmasse als solche nach bekannten Methoden zurückgewonnen werden, vorzugsweise wird jedoch die Lösung oder Suspension direkt weiterverwendet.

Diese Lösungen können nach den üblichen Methoden verarbeitet werden, wie sie bei der Beschichtung von Polymerlösungen auf beliebige Substrate wie Glas, Metalle, Halbleiter und Kunststoffe eingesetzt werden: Spin-coating, Beschichten aus einer Breitschlitzdüse, Rakelbeschichtung, Tauchbeschichtung, Sprühbeschichtung, elektrostatische Sprühbeschichtung, Walzenbeschichtung, Drucken und ähnliche Verfahren. Die Schichtdicke der Beschichtung wird durch das Auftragsverfahren, die Trocknungsbedingungen und die Viskosität der Lösungen bestimmt und liegt üblicherweise im Bereich von 20 nm bis 1000 nm.

Die Schichtdicke der leitfähigen Schicht richtet sich weiterhin weitgehend nach der gewünschten Leitfähigkeit und der Transparenz. Mit wachsender Schichtdicke wird der Oberflächenwiderstand kleiner und die Transparenz schlechter. Die verwendeten leitfähigen Oligomeren besitzen einen spezifischen Widerstand zwischen 10⁻³ S/cm und 10 S/cm, so daß eine Schichtdicke von 100 nm einen Oberflächenwiderstand zwischen 1·10⁸ Ohm und 1·10⁴ Ohm ergibt. Die Extinktion bei einer Schichtdicke von 100 nm hat im sichtbaren Bereich ein Maximum zwischen 550 nm und 1000 nm, vorzugsweise zwischen 600 nm und 900 nm mit einer optischen Dichte von 0,1 bis 2,0, in Transmission erscheinen die Beschichtungen meist blau. Das bedeutet, daß die erfindungsgemäßen Beschichtungen im sichtbaren Bereich gut transparent sind und gleichzeitig die Aufgabe der Ableitung von elektrischen Ladungen sehr gut erfüllen. Besonders geeignet sind solche aufgebrachten Schichten aus elektrisch leitenden Oligomeren auf Kunststoffen wie Polyethylenterephthalat, Polyethylen, Polypropylen, Polyvinylchlorid, Polyacrylnitril u.ä., wenn sie außerdem noch im sichtbaren Spektralbereich transparent sind.

Folienbahnen können auf einfache Weise mit einer leitfähigen Schicht versehen werden, indem man dieselben Verfahren und Maschinen benutzt wie sie z.B. bei der Beschichtung von photographischen Filmen, Folien oder von Aluminiumträgern für Offsetdruckplatten verwendet werden. Im allgemeinen braucht die leitfähige Beschichtung nur auf einer Seite der Folie aufgebracht werden, sofern das Substrat nicht zu dick ist. Falls es aber notwendig sein sollte, kann auch die andere Seite der Folie mit einer leitfähigen Schicht versehen werden. Diese muß nicht notwendigerweise mit der leitfähigen Schicht auf der Vorderseite identisch sein.

Weiterhin können Materialien mit großer innerer Oberfläche wie Textilien, Stoffbahnen, Fasern, Schwämme, geschäumter Kunststoff etc. durch Tauchen beschichtet werden.

Durch das Aufbringen von dünnen Schichten mit Schichtdicken kleiner als 1 µm aus der erfindungsgemäßen Beschichtungsmasse können Katalysatoren, elektrisch leitende Drähte, Sensoren, Halbleiter-Bauelemente, Solarzellen, Schutzüberzüge für Solarzellen, Abschirmmaterialien, Tarnanstriche im Infrarot- und Mikrowellengebiet, Flächenheizleiter, Spezialelektroden, elektrisch leitende bzw. antistatisch ausgerüstete Folien und Fasern, antistatisch ausgerüstete Schaumstoffe, Folien für Schallplattenhüllen, leitfähige Trägerfolien für Filmmaterialien, insbesondere für photographische Filme und für Röntgenfilme, Skalenabdeckungen für Meßgeräte, Kontrastverstärkung für Bildschirme verknüpft mit Verhinderung elektrostatischer Aufladung entweder durch direktes Beschichten der Bildschirm-Vorderseite, oder durch Vorsetzen einer beschichteten Glas- oder Kunststoff-Platte, oder durch Anbringen einer beschichteten Folie, Touch-Panel Anordnungen für Bildschirme, auf einfache Weise hergestellt und realisiert werden.

Die Komgination der besonderen Eigenschaften der löslichen elektrisch leitenden Oligomeren mit nicht-leitenden Polymeren ermöglichen ihren Einsatz in Anwendungen, die vorher nicht möglich war, weil die üblichen leitfähigen Polymeren im dotierten Zustand nicht löslich waren. So lassen sich Verfahren, die bei der Herstellung von Bauteilen der Mikroelektronik eingesetzt werden, in analoger Weise anwenden: Spin-coating, Strukturierung mit den bekannten Verfahren der Dünnfilmtechnologie z.B. mit lichtempfindlichem Lack oder Resist.

Die folgenden Beispiele sollen die Erfindung weiter erläutern. Die angegebenen Mengen beziehen sich auf das Gewicht.

### Beispiel 1

6,59 Teile Tetraethylammoniumtetrafluoroborat, 4,56 Teile 3-Methoxythiophen und 300 Teile Acetonitril wurden in eine ungeteilte Elektrolysezelle mit Kühlmantel gegeben. Die Kathode bestand aus V2A-Stahl-Blechen von 80 mm Länge, 55 mm Breite. Als Anode wurde ein Kohlenstoff-Filz (Flächengewicht ca. 0,3 kg/m², spez. Oberfläche BET ca. 1,5 m²/g), von 80 mm Länge, 55 mm Breite und 3 mm Dicke eingesetzt (beidseitige geometrische Fläche ca. 90 cm²). Die Anode wurde in einem Abstand von 2 cm parallel zur Kathode befestigt, getrennt über einen Abstandshalter aus Polypropylen-Netz. Zusätzlich wurde eine Ag/AgCl-Referenzelektrode verwendet (Anodenpotential vs. Ag/Agcl 1,48 V). Bei einer Elektrolysetemperatur von 20°C und einem Anodenstrom von 400 mA erhielt man eine Zellenspannung von 5 bis 11 Volt. Nach der Hälfte der theoretisch benötigten Strommenge wurde die mit den Oligomeren beladene Anode gegen eine neue ausgetauscht und nach Verbrauch der theoretischen Strommenge wurde die Elektrolyse beendet. Die mit dem Rohprodukt beladenen Anoden wurden jeweils sofort nach dem Austausch getrocknet und in ein Bad mit Methylenchlorid gestellt und dort mehrfach längere Zeit digeriert. Nach dem erneuten Trocknen wurden die mit den Oligomeren beladenen Kohlenstoff-Filze in einem Bad mit Acetonitril solange digeriert, bis die Oligomeren praktisch vollständig in Lösung gegangen waren. Die tief dunkelblaue Lösung wurde im Rotationsverdampfer zur Trockene eingeengt. Das Rohprodukt wurde mechanisch zerkleinert, mit Wasser gewaschen, getrocknet, 12 h mit Methylenchlorid digeriert, anschließend abfiltriert und getrocknet. Zur weiteren Reinigung wurde das erhaltene Material erneut in Acetonitril gelöst und 0,5 h bei 10000 U/min zentrifugiert und das Zentrifugat im Rotationsverdampfer zur Trockene eingeengt. Es wurden 2,2 Teile eines bronzemetallisch glänzenden Feststoffs erhalten. Die Elementaranalyse lieferte folgende Werte:
45,1 % C, 3,2 % H, 23,1 % S, 9,6 % F. Ein Pulverpreßline des gemahlenen Produktes besaß eine spezifische Leitfähigkeit von 7,1·10⁻³ S/cm. Bei der DTG wurde bis 260°C ein Gewichtsverlust von weniger als 10 % beobachtet. Die DSC zeigte ein Maximum bei 305°C. Im Massenspektrum der undotierten Form wurden die Molekülionen des Pentameren (m/e = 562) und Hexameren (m/e = 674) nachgewiesen. Die GPC der undotierten Form ergab, daß mehr als 80 % des Produktes aus Pentameren und Hexameren bestanden. Im UV/VIS/NIR-Spektrum in Tetrahydrofuran zeigte das undotierte Pentamere ein Maximum bei λ - 460 nm, das undotierte Hexamere ein Maximum bei λ = 486 nm.

Die folgenden Bestandteile wurden durch Rühren in 100 ml Acetonitril gelöst: 0,8 g des vorstehend beschriebenen Oligomeren und 0,2 g Poly-Methylmethacrylat mit einem Schmelzindex MFI (230/3,8)= 11,0 g/10 min, bestimmt nach DIN 53735, und einem Molekulargewicht von 1,2·10⁻⁵ g/Mol. Die Lösung wurde mit Hilfe eines Spin-coaters mit einer Umdrehungszahl von ca. 1000 U/min auf ein Glassubstrat von 50 mm · 50 mm beschichtet. Die Dicke des Films wurde mit einem Profilometer gemessen und betrug 53,6 nm. Die Schicht wurde an zwei gegenüberliegenden Kanten mit Leitsilber versehen und auf jeder Seite mit zwei Kupferdrähten von 50 µm Durchmesser kontaktiert. Der spezifische Widerstand wurde mit einem Elektrometer im V/I Mode bei Spannungen zwischen -10 V und 100 V im 10 V-Schritten gemessen. Der gemittelte Wert des spezifischen Widerstands betrug 2·10³ Ohm·cm. Bei der gleichen Schicht wurde ein Transmissions-Spektrum aufgenommen, das ein Maximum bei 660 nm und eine optische Dichte 0,37 aufwies.

Die gleiche Beschichtungslösung wurde bei gleichen Bedingungen auf größere Glasplatten von 20 cm · 20 cm geschleudert. Man erhielt sehr homogene und in der Schichtdicke gleichmäßige Filme auf dem Glas. Diese beschichteten Glasplatten eignen sich ausgezeichnet zur Kontrasterhöhung bei Bildschirmgeräten, wenn sie vor dem Bildschirm befestigt wurden. Außerdem konnten sie aufgrund ihrer Leitfähigkeit zur Ableitung von elektrostatischen Ladungen, die von dem Bildschirm induziert wurden, benutzt werden. Dazu wurde die leitfähige Schicht am Rand mit einem dünnen Kupferdraht kontaktiert, wie oben beschrieben, und dieser mit der Schutzerde des Gerätes verbunden. Dadurch wurde die Verschmutzung des Bildschirms verhindert und gleichzeitig der Kontrast erhöht.

### Beispiel 2

Mit den gleichen Materialien wie in Beispiel 1 wurde folgende Lösung angesetzt: 0,5 g leitfähiges Oligomer und 0,5 g Poly-Methylmethacrylat in 100 ml Acetonitril. Nach Aufschleudern und Messung wie in Beispiel 1 beschrieben, erhielt man folgende Meßwerte: Schichtdicke 49,7 nm, spezifischer Widerstand 8·10³ Ohm·cm, maximale Extinktion bei 660 nm und optische Dichte von 0,27. Diese Lösung wurde ebenfalls auf größere Glasplatten geschleudert und vor einem Datensichtgerät angebracht. Auch hier erhielt man eine Verbesserung des Kontrasts und eine gute antistatische Wirkung.

### Beispiel 3

Mit den gleichen Materialien wie in Beispiel 1 wurde folgende Lösung in 100 ml Acetonitril angesetzt und auf Glasplatten aufgeschleudet: 0,2 g leitfähiges Oligomer und 0,8 g Poly-Methylmethacrylat. Die Messung in der oben beschriebenen Weise ergab folgende Daten: Schichtdicke 50,5 nm, spezifischer Widerstand 4·10⁶ Ohm·cm, maximale Extinktion bei 650 nm und optische Dichte von 0,1. Vor einem Bildschirm angebracht erhielt man eine antistatische Wirkung, aber kaum noch eine Kontrastverbesserung.

### Beispiel 4

Die folgenden Bestandteile wurden durch Rühren in 28 ml Acetonitril, 60 ml 3-Methoxypropionitril, 10 ml γ-Butyrolaceton gelöst: 1,0 g leitfähiges Oligomer von Beispiel 1 und 1,0 g Poly-methylmethacrylat vom gleichen Typ wie in Beispiel 1. Man erhielt eine tiefblaue Lösung, die in einer Kiss-Coat Apparatur benutzt wurde, um eine 1,5 m lange und 0,2 m breite Polyesterfolie zu beschichten. Die Dicke der Folie betrug 125 µm. In der Apparatur wurde die Folie zu einer Endlosschlaufe zusammengeklebt und über zwei Walzen gestülpt, die in vertikaler Richtung angeordnet waren. eine der Walzen konnte mit einem Motor angetrieben werden. Die Folie berührte an der unteren Walze, deren Durchmesser 200 mm betrug, die Flüssigkeitsoberfläche der Beschichtungslösung, wobei die Lösung die Folie benetzte und einen Meniskus bildete. Mit Hilfe der angetriebenen Walzen wurde die Folie an der Oberfläche beschichtet. An der Maschine befand sich eine Trocknungsvorrichtung, so daß der Film gleichzeitig getrocknet werden konnte. Mit einer Bandgeschwindigkeit von 3,0 m/min erhielt man so auf der Folie einen sehr gut haftenden Film, der einen Oberflächenwiderstand von 2,1·10⁸ Ohm und eine optische Dichte von 0,32 bei einer Wellenlänge von 670 nm aufwies. Die Gleichmäßigkeit des Films war ausgezeichnet und die Haftung auf der so beschichteten Folie war auch nach Ziehen über eine scharfe Kante ohne Fehler.

### Beispiel 5

4,33 Teile 3-Methoxythiophen, 0,26 Teile 3-Ethoxythiophen, 4,34 Teile Tetraethylammoniumtetrafluoroborat und 250 Teile Acetonitril wurden in einer Elektrolysezelle gemäß Beispiel 1, jedoch ohne Referenzelektrode, elektrolysiert und aufgearbeitet. Es wurden 1,2 Teile eines bronzemetallisch glänzenden Feststoffs erhalten. Die Elementaranalyse lieferte folgende Werte: 42,5 % C, 2,9 % H, 22,9 % S, 9,0 % F. Ein Pulverpreßling des gemahlenen Produktes besaß eine spezifische Leitfähigkeit von 2,0·10⁻³ S/cm. Bei der DTG wurde bis 210°C ein Gewichtsverlust von weniger als 10 % beobachtet. Die DSC zeigte ein Maximum bei 320°C. Im Massenspektrum der undotierten Form wurde das Molekülion des Pentameren (m/e = 576) aus vier Methoxythiopheneinheiten und einer Ethoxythiopheneinheit nachgewiesen.

1 g dieses Oligomeren wurde gelöst in 100 ml eines Lösemittelgemischs mit folgender Zusammensetzung: 2 Teile Acetonitril, 4 Teile Propionitril, 2 Teile 3-Methoxypropionitril, 2 Teile Nitromethan. Dazu wurden 0,8 g Poly-vinylacetat (MG ca 35000, EP 80 bis 100°C) gegeben, durch Rühren gelöst und in derselben Apparatur beschichtet, die in Beispiel 4 beschrieben ist, wobei die Bandgeschwindigkeit 2,5 m/min betrug. Als Folie wurde eine 100 µm dicke Polyesterfolie verwendet. Man erhielt einen auf der Folie sehr gut haftenden Film, der einen Oberflächenwiderstand von 2 · 10⁷ Ohm aufwies.

### Beispiel 6

Folgende Lösung wurde angesetzt: In 40 ml γ-Butyrolacton, 20 ml Acetonitril, 20 ml Aceton, 10 ml Propionitril wurden 1 g eines leitenden Oligomeren, dessen Herstellung im Beispiel 1 beschrieben ist, bei Zimmertemperatur durch Rühren gelöst. Diese Lösung wurde dazu verwendet, mit einer handelsüblichen Vorrichtung zur Spraybeschichtung eine PVC-Folie von 200 µm Dicke zu beschichten. Die Dicke der aufgesprühten leitfähigen Schicht richtete sich nach der Dauer der Einwirkung. Der Oberflächenwiderstand der beschichteten Folie wurde mit einer Schutzringelektrode nach DIN 53482 gemessen und betrug 4 · 10⁶ Ohm, die optische Dichte 0,8 bei 690 nm.

### Beispiel 7

5,13 Teile 3-Ethoxythiophen, 4,34 Teile Tetraethylammoniumtetrafluoroborat und 250 Teile Acetonitril wurden gemäß Beispiel 1 elektrolysiert und aufgearbeitet. Es wurden 1,2 Teile eines bronzemetallisch glänzenden Feststoffs erhalten. Die Elementaranalyse lieferte folgende Werte: 48,1 % C, 4,2 % H, 19,9 % S, 8,5 % F. Ein Pulverpreßling des gemahlenen Produktes besaß eine spezifische Leitfähigkeit von 1,0·10⁻² S/cm. Bei der DTG wurde bis 205°C ein Gewichtsverlust von weniger als 10 % beobachtet. Die DSC zeigte ein Maximum bei 305°C. Im Massenspektrum der undotierten Form wurde das Molekülion des Pentameren (m/e = 632) nachgewiesen.

In einem Lösemittelgemisch, bestehend aus 30 ml γ-Butyrolacton, 10 ml Nitromethan, 10 ml N-Methylpyrrolidon und 10 ml Butyronitril wurden 1 g des obengenannten Oligomeren und 1,5 g eines Styrol-Acrylnitril-Copolymeren gegeben und durch Rühren bei 50°C gelöst. Diese Lösung wurde in eine Siebdruckvorrichtung gebracht und zum Bedrucken einer Folie aus PVC benutzt. Das bedruckte Muster bestand aus aufeinander senkrecht stehenden Linien von 1 mm Breite mit 1 mm Zwischenraum. Der Oberflächenwiderstand, gemessen mit einer Schutzringelektrode nach DIN 53482, betrug 3 · 10⁷ Ohm.

### Beispiel 8

Die gleiche Lösung wie in Beispiel 7 wurde dazu verwendet, 100 µm dicke Fasern aus Poly-Acrylnitril durch Eintauchen in die Lösung zu beschichten. Bei einer Einwirkzeit von 1 min erhielt man eine gut auf der Faseroberfläche haftende Beschichtung. Der Widerstand der so beschichteten Fasern wurde durch Kontaktierung mit Leitsilber im Abstand von 10 mm gemessen und betrug 1 · 10⁸ Ohm.

## Patentansprüche (Patentansprüche für folgende(n) Vertragsstaat(en): AT, BE, CH, DE, FR, GB, GR, IT, LI, LU, NL, SE)

1. Elektrisch leitende Beschichtungsmasse, bestehend aus 10 bis 90 Gew.-% eines Oligomeren mit drei bis zehn Struktureinheiten, die durch Verknüpfung in 2-Stellung und/oder 5-Stellung miteinander verbunden sind, im statistischen Mittel bestehend aus 60 bis 100 Gew.-% Struktureinheiten, die sich von mindestens einem Monomeren der Formel (I) ableiten 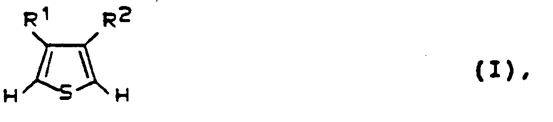 worin
R¹ eine C₁-C₁₂-Alkoxygruppe oder -O(CH₂CH₂O)ₙCH₃ mit n = 1 bis 4 und
R² ein Wasserstoffatom, eine C₁-C₁₂-Alkylgruppe, eine C₁-C₁₂-Alkoxygruppe oder -O(CH₂CH₂O)ₙCH₃ mit n = 1 bis 4 bedeuten, oder R¹ zusammen mit R² -O(CH₂)ₘ-CH₂- oder -O(CH₂)ₘ-O-, worin m = 1 bis 12 ist, darstellt,
0 bis 40 Gew.-% Struktureinheiten, die sich von mindestens einem Monomeren der Formel (II) ableiten 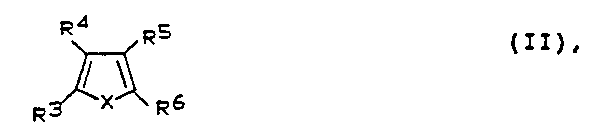 worin R⁴ und R⁵ unabhängig voneinander ein Wasserstoffatom, ein Halogenatom, eine C₁-C₁₂-Alkylgruppe oder Aryl bedeuten oder zusammen mit den sie verbindenden C-Atomen einen aromatischen Ring bilden,
R³ und R⁶ unabhängig voneinander ein Wasserstoffatom bedeuten oder R³ zusammen mit R⁴ und den sie verbindenden C-Atomen oder R⁵ zusammen mit R⁶ und den sie verbindenden C-Atomen jeweils einen aromatischen Ring bilden,
X ein Sauerstoffatom, ein Schwefelatom, eine =NH-Gruppe, eine =N-Alkylgruppe oder eine =N-Arylgruppe bedeutet,
0 bis 40 Gew.-% Struktureinheiten, die sich von mindestens einem Monomeren der Formel (III) ableiten 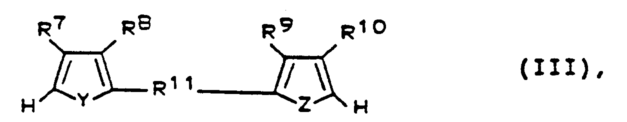 worin R⁷, R⁸, R⁹ und R¹⁰ unabhängig voneinander ein Wasserstoffatom, eine C₁-C₁₂-Alkylgruppe, eine C₁-C₁₂-Alkoxygruppe oder eine Arylgruppe bedeuten,
Y und Z unabhängig von einander ein Sauerstoffatom, ein Schwefelatom, eine =NH-Gruppe, eine =N-Alkylgruppe oder =N-Arylgruppe bedeuten,
R¹¹ eine Arylengruppe, eine Heteroarylengruppe oder ein konjugiertes System der Formel (CH=CH)ₒ , worin o null, 1, 2 oder 3 ist, bedeutet,
0 bis 40 Gew.-% Struktureinheiten, die sich von mindestens einem Monomeren der Formel (IV) ableiten 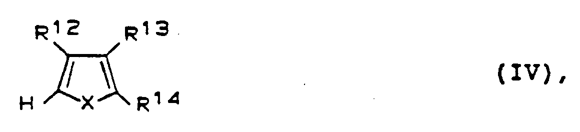 worin R¹² und R¹³ unabhängig voneinander ein Wasserstoffatom, ein Halogenatom, eine C₁-C₁₂-Alkylgruppe, eine C₁-C₁₂-Alkoxygruppe, eine C₁-C₄-Alkylaminogruppe oder eine C₁-C₄-Acylaminogruppe, R¹⁴ ein Halogenatom, eine C₁-C₁₂-Alkylgruppe, eine C₁-C₁₂-Alkoxygruppe, eine C₁-C₄-Alkylaminogruppe oder eine C₁-C₄-Acylaminogruppe bedeuten und X die oben angegebene Bedeutung hat,
wobei das Oligomere in der oxidierten Form in dipolar aprotischen Lösemitteln oder Lösemittelgemischen bei 25°C vollständig löslich ist und Lösungen mit einem Gehalt von mindestens 0,5 g des Oligomeren in 100 ml Lösemittel oder Lösemittelgemischen bei 25°C erhalten werden, und
10 bis 90 Gew.-% eines Polymeren, welches in Lösemitteln mit einen δ_{P}-Wert von größer 3,5 (cal/ccm)^{½} und einem δ_{H}-Wert von kleiner 6,5 (cal/ccm)^{½} löslich oder quellbar ist.

2. Beschichtungsmasse nach Anspruch 1, dadurch gekennzeichnet, daß das Oligomere und das Polymer in Lösemitteln oder Lösemittelgemischen mit einem δ_{P}-Wert größer 5,5 (cal/ccm)^{½} und einem δ_{H}-Wert kleiner 5,0 (cal(ccm)^{½} löslich oder quellbar sind.

3. Beschichtungsmasse nach Anspruch 1, dadurch gekennzeichnet, daß das Polymere Poly-vinylacetal, Poly-vinylacetat, Poly-maleinsäureanhydrid, Poly-N-vinylpyrrolidon, Poly-4-vinylpyridin, Poly-methylmethacrylat, Poly-ethylmethacrylat, Poly-acrolein, Poly-formaldehyd, Poly-ethylenoxid, Poly-propylenoxid, Celluloseacetat, Styrol-Acrylnitril-Copolymere, Poly-acrylnitril, Poly-methacrylnitril, Poly-vinylchlorid, Poly-vinylidenfluorid, Poly-N-vinylcarbazol, Poly-N-vinylacetamid, Poly-acrylsäureanhydrid, Poly-ethylencarbonat oder Poly-ε-caprolactam ist.

4. Verfahren zur Herstellung der Beschichtungsmasse nach Anspruch 1, dadurch gekennzeichnet, daß man Oligomeres und Polymeres gemeinsam in einem Lösemittel mit einem δ_{P}-Wert größer 3,5 (cal/ccm)^{½} und einem δ_{H}-Wert kleiner 6,5 (cal/ccm)^{½} löst oder quellen läßt und das Gemisch aus dem Lösemittel zurückgewinnt.

5. Verwendung der Beschichtungsmasse nach Anspruch 1 zur Herstellung von elektrisch leitenden Schichten auf nicht leitenden und halbleitenden Materialien.

6. Folie aus Kunststoff, beschichtet mit der Beschichtungsmasse gemäß Anspruch 1.

7. Lösung, enthaltend eine elektrisch leitende Beschichtungsmasse, dadurch gekennzeichnet, daß sie 0,1 bis 20 Gew.-% der Beschichtungsmasse gemäß Anspruch 1 gelöst in 80 bis 99,9 Gew.-% eines dipolaren aprotischen Lösungmittels oder Lösungsmittels-Gemisches enthält, das einen δ_{P}-Wert größer 3,5 (cal/ccm)½ und einen δ_{H}-Wert kleiner 6,5 (cal/ccm) ½ aufweist.

## Patentansprüche (Patentansprüche für folgende(n) Vertragsstaat(en): ES)

1. Verfahren zur Herstellung einer elektrisch leitenden Beschichtungsmasse, bestehend aus 10 bis 90 Gew.-% eines Oligomeren mit drei bis zehn Struktureinheiten, die durch Verknüpfung in 2-Stellung und/oder 5-Stellung miteinander verbunden sind, im statistischen Mittel bestehend aus 60 bis 100 Gew.-% Struktureinheiten, die sich von mindestens einem Monomeren der Formel (I) ableiten 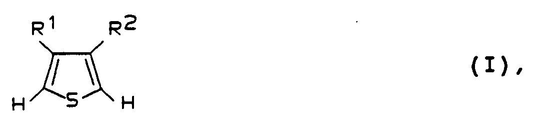 worin
R¹ eine C₁-C₁₂-Alkoxygruppe oder -O(CH₂CH₂O)ₙCH₃ mit n = 1 bis 4 und
R² ein Wasserstoffatom, eine C₁-C₁₂-Alkylgruppe, eine C₁-C₁₂-Alkoxygruppe oder -O(CH₂CH₂O)ₙCH₃ mit n = 1 bis 4 bedeuten, oder R¹ zusammen mit R² -O(CH₂)ₘ-CH₂- oder -O(CH₂)ₘ-O-, worin m = 1 bis 12 ist, darstellt,
0 bis 40 Gew.-% Struktureinheiten, die sich von mindestens einem Monomeren der Formel (II) ableiten 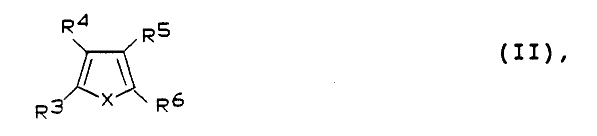 worin R⁴ und R⁵ unabhängig voneinander ein Wasserstoffatom, ein Halogenatom, eine C₁-C₁₂-Alkylgruppe oder Aryl bedeuten oder zusammen mit den sie verbindenden C-Atomen einen aromatischen Ring bilden,
R³ und R⁶ unabhängig voneinander ein Wasserstoffatom bedeuten oder R³ zusammen mit R⁴ und den sie verbindenden C-Atomen oder R⁵ zusammen mit R⁶ und den sie verbindenden C-Atomen jeweils einen aromatischen Ring bilden,
X ein Sauerstoffatom, ein Schwefelatom, eine =NH-Gruppe, eine =N-Alkylgruppe oder eine =N-Arylgruppe bedeutet,
0 bis 40 Gew.-% Struktureinheiten, die sich von mindestens einem Monomeren der Formel (III) ableiten 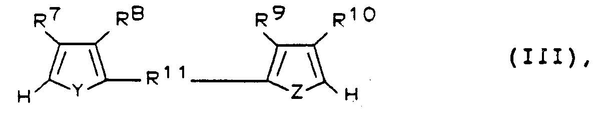 worin R⁷, R⁸, R⁹ und R¹⁰ unabhängig voneinander ein Wasserstoffatom, eine C₁-C₁₂-Alkylgruppe, eine C₁-C₁₂-Alkoxygruppe oder eine Arylgruppe bedeuten,
Y und Z unabhängig von einander ein Sauerstoffatom, ein Schwefelatom, eine =NH-Gruppe, eine =N-Alkylgruppe oder =N-Arylgruppe bedeuten,
R¹¹ eine Arylengruppe, eine Heteroarylengruppe oder ein konjugiertes System der Formel (CH=CH)ₒ , worin o null, 1, 2 oder 3 ist, bedeutet,
0 bis 40 Gew.-% Struktureinheiten, die sich von mindestens einem Monomeren der Formel (IV) ableiten 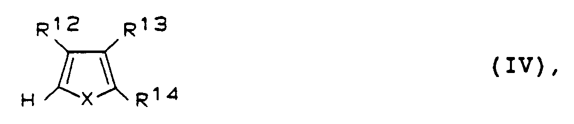 worin R¹² und R¹³ unabhängig voneinander ein Wasserstoffatom, ein Halogenatom, eine C₁-C₁₂-Alkylgruppe, eine C₁-C₁₂-Alkoxygruppe, eine C₁-C₄-Alkylaminogruppe oder eine C₁-C₄-Acylaminogruppe, R¹⁴ ein Halogenatom, eine C₁-C₁₂-Alkylgruppe, eine C₁-C₁₂-Alkoxygruppe, eine C₁-C₄-Alkylaminogruppe oder eine C₁-C₄-Acylaminogruppe bedeuten und X die oben angegebene Bedeutung hat,
wobei das Oligomere in der oxidierten Form in dipolar aprotischen Lösemitteln oder Lösemittelgemischen bei 25°C vollständig löslich ist und Lösungen mit einem Gehalt von mindestens 0,5 g des Oligomeren in 100 ml Lösemittel oder Lösemittelgemischen bei 25°C erhalten wird und 10 bis 90 Gew.-% eines Polymeren, welches in Lösemitteln mit einen δ_{P}-Wert von größer 3,5 (cal/ccm)^{½} und einem δ_{H}-Wert von kleiner 6,5 (cal/ccm)^{½} gelöst oder gequollen wird, dadurch gekennzeichnet, daß man Oligomeres und Polymeres gemeinsam in einem Lösemittel mit einem δ_{P}-Wert größer 3,5 (cal/ccm)^{½} und einem δ_{H}-Wert kleiner 6,5 (cal/ccm)^{½} löst oder quellen läßt und das Gemisch aus dem Lösemittel zurückgewinnt.

2. Verfahren nach Anspruch 1, dadurch gekennzeichnet, daß das Oligomere und das Polymer in Lösemitteln oder Lösemittelgemischen mit einem δ_{P}-Wert größer 5,5 (cal/ccm)^{½} und einem δ_{H}-Wert kleiner 5,0 (cal/ccm)^{½} gelöst oder gequollen werden.

3. Verfahren nach Anspruch 1, dadurch gekennzeichnet, daß als Polymere Poly-vinylacetal, Poly-vinylacetat, Poly-maleinsäureanhydrid, Poly-N-vinylpyrrolidon, Poly-4-vinylpyridin, Poly-methylmethacrylat, Poly-ethylmethacrylat, Poly-acrolein, Poly-formaldehyd, Poly-ethylenoxid, Poly-propylenoxid, Celluloseacetat, Styrol-Acrylnitril-Copolymere, Poly-acrylnitril, Poly-methacrylnitril, Poly-vinylchlorid, Poly-vinylidenfluorid, Poly-N-vinylcarbazol, Poly-N-vinylacetamid, Poly-acrylsäureanhydrid, Poly-ethylencarbonat oder Poly-ε-caprolactam eingesetzt werden.

4. Verwendung der nach Anspruch 1 hergestellten Beschichtungsmasse zur Herstellung von elektrisch leitenden Schichten auf nicht leitenden und halbleitenden Materialien.

5. Folie aus Kunststoff, beschichtet mit der Beschichtungsmasse gemäß Anspruch 1.

6. Lösung, enthaltend eine elektrisch leitende Beschichtungsmasse, dadurch gekennzeichnet, daß sie 0,1 bis 20 Gew.-% der Beschichtungsmasse gemäß Anspruch 1 gelöst in 80 bis 99,9 Gew.-% eines dipolaren aprotischen Lösungmittels oder Lösungsmittels-Gemisches enthält, das einen δ_{P}-Wert größer 3,5 (cal/ccm)½ und einen δ_{H}-Wert kleiner 6,5 (cal/ccm) ½ aufweist.

## Claims (Claims for the following Contracting State(s): AT, BE, CH, DE, FR, GB, GR, IT, LI, LU, NL, SE)

1. An electroconductive coating composition comprising 10 to 90% by weight of an oligomer having three to ten structural units which are connected to one another by linkage in the two-position and/or five-position, on statistical average comprising 60 to 100% by weight of structural units derived from at least one monomer of the formula (I) 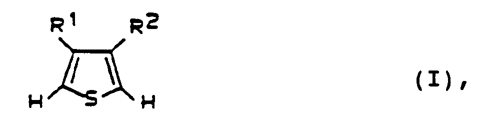 in which
R¹ denotes a C₁-C₁₂ alkoxy group or -O(CH₂CH₂O)ₙCH₃ where n = 1 to 4 and
R² denotes a hydrogen atom, a C₁-C₁₂-alkyl group, a C₁-C₁₂-alkoxy group or -O(CH₂CH₂O)ₙCH₃ where n = 1 to 4, or R¹ together with R² represents -O(CH₂)ₘ-CH₂- or -O(CH₂)ₘ-O-, in which m is 1 to 12,
0 to 40% by weight of structural units derived from at least one monomer of the formula (II) 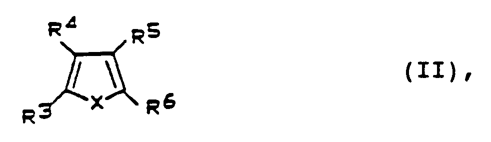 in which R⁴ and R⁵, independently of one another, denote a hydrogen atom, a halogen atom, a C₁-C₁₂-alkyl group or aryl or, together with the carbon atoms linking them, form an aromatic ring,
R³ and R⁶, independently of one another, denote a hydrogen atom, or R³ together with R⁴ and the carbon atoms linking them, or R⁵ together with R⁶ together with the carbon atoms linking them, in each case form an aromatic ring,
X denotes an oxygen atom, a sulfur atom, an =NH group, an =N-alkyl group or an =N-aryl group,
0 to 40% by weight of structural units derived from at least one monomer of the formula (III) 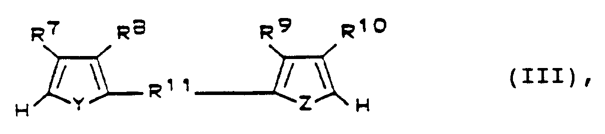 in which R⁷, R⁸, R⁹ and R¹⁰ independently of one another denote a hydrogen atom, a C₁-C₁₂-alkyl group, a C₁-C₁₂-alkoxy group or an aryl group,
Y and Z, independently of one another, denote an oxygen atom, a sulfur atom, an =NH group, an =N-alkyl group or an =N-aryl group,
R¹¹ denotes an arylene group, a heteroarylene group or a conjugated system of the formula (CH=CH)ₒ, in which o is zero, 1, 2 or 3,
0 to 40% by weight of structural units derived from at least one monomer of the formula (IV) 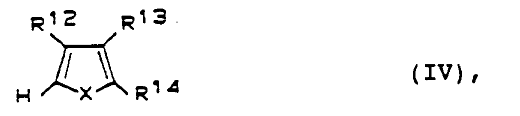 in which R¹² and R¹³, independently of one another, denote a hydrogen atom, a halogen atom, a C₁-C₁₂-alkyl group a C₁-C₁₂-alkoxy group, a C₁-C₄-alkylamino group or a C₁-C₄-acylamino group, R¹⁴ denotes a halogen atom, a C₁-C₁₂-alkyl group, a C₁-C₁₂-alkoxy group, a C₁-C₄-alkylamino group or a C₁-C₄-acylamino group and X has the abovementioned meaning,
where the oligomer, in the oxidized form, is completely soluble in dipolar aprotic solvents or solvent mixtures at 25°C, and solutions having a content of at least 0.5 g of the oligomer in 100 ml of solvent or solvent mixtures are obtained at 25°C, and
10 to 90% by weight of a polymer which is soluble or swellable in solvents having a δ_{P} value greater than 3.5 (cal/ccm)^{½} and a δ_{H} value less than 6.5 (cal/ccm)^{½}.

2. A coating composition as claimed in claim 1, wherein the oligomer and the polymer are soluble or swellable in solvents or solvent mixtures having a δ_{P} value greater than 5.5 (cal/ccm)^{½} and a δ_{H} value less than 5.0 (cal/ccm)^{½}.

3. A coating composition as claimed in claim 1, wherein the polymer is poly(vinyl acetal), poly(vinyl acetate), poly (maleic anhydride), poly-N-vinylpyrrolidone, poly-4-vinyl-pyridine, poly(methyl methacrylate), poly(ethylmethacrylate), polyacrolein, polyformaldehyde, poly(ethylene oxide), poly(propylene oxide), cellulose acetate, styrene-acrylonitrile copolymers, polyacrylonitrile, polymethacrylonitrile, poly(vinyl chloride), poly(vinylidene fluoride), poly-N-vinylcarbazole, poly-N-vinylacetamide, poly(acrylic anhydride), poly(ethylene carbonate) or poly-ε-caprolactam.

4. A process for the production of the coating composition as claimed in claim 1, wherein the oligomer and the polymer are dissolved or swollen together in a solvent having a δ_{P} value greater than 3.5 (cal/ccm)^{½} and a δ_{H} value less than 6.5 (cal/ccm)^{½}, and the mixture is recovered from the solvent.

5. The use of the coating composition as claimed in claim 1, for the production of electroconductive coatings on nonconductive and semiconductive materials.

6. A plastic film coated with a coating composition as claimed in claim 1.

7. A solution containing an electroconductive coating composition, wherein it contains from 0.1 to 20% by weight of the coating composition as claimed in claim 1 dissolved in 80 to 99.9% by weight of a dipolar aprotic solvent or solvent mixture which has a δ_{P} value greater than 3.5 (cal/ccm)^{½} and a δ_{H} value less than 6.5 (cal/ccm)^{½}.

## Claims (Claims for the following Contracting State(s): ES)

1. A process for the production of an electroconductive coating composition comprising 10 to 90% by weight of an oligomer having three to ten structural units which are connected to one another by linkage in the two-position and/or five-position, on statistical average comprising 60 to 100% by weight of structural units derived from at least one monomer of the formula (I) 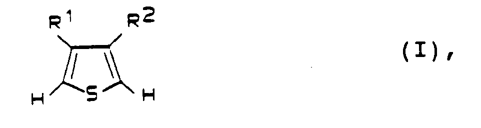 in which
R¹ denotes a C₁-C₁₂ alkoxy group or -O(CH₂CH₂O)ₙCH₃ where n = 1 to 4 and
R² denotes a hydrogen atom, a C₁-C₁₂-alkyl group, a C₁-C₁₂-alkoxy group or -O(CH₂CH₂O)ₙCH₃ where n = 1 to 4, or R¹ together with R² represents -O(CH₂)ₘ-CH₂- or -O(CH₂)ₘ-O-, in which m is 1 to 12,
0 to 40% by weight of structural units derived from at least one monomer of formula (II) 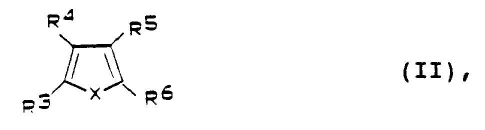 in which R⁴ and R⁵, independently of one another, denote a hydrogen atom, a halogen atom, a C₁-C₁₂-alkyl group or aryl or, together with the carbon atoms linking them, form an aromatic ring,
R³ and R⁶, independently of one another, denote a hydrogen atom, or R³ together with R⁴ and the carbon atoms linking them, or R⁵ together with R⁶ together with the carbon atoms linking them, in each case form an aromatic ring,
X denotes an oxygen atom, a sulfur atom, an =NH group, an =N-alkyl group or an =N-aryl group,
0 to 40% by weight of structural units derived from at least one monomer of formula (III) 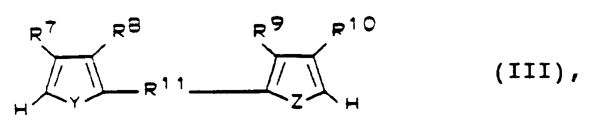 in which R⁷, R⁸, R⁹ and R¹⁰ independently of one another denote a hydrogen atom, a C₁-C₁₂-alkyl group, a C₁-C₁₂-alkoxy group or an aryl group,
Y and Z, independently of one another, denote an oxygen atom, a sulfur atom, an =NH group, an =N-alkyl group or an =N-aryl group,
R¹¹ denotes an arylene group, a heteroarylene group or a conjugated system of the formula (CH=CH)ₒ, in which o is zero, 1, 2 or 3,
0 to 40% by weight of structural units derived from at least one monomer of the formula (IV) 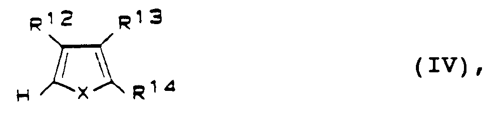 in which R¹² and R¹³, independently of one another, denote a hydrogen atom, a halogen atom, a C₁-C₁₂-alkyl group a C₁-C₁₂-alkoxy group, a C₁-C₄-alkylamino group or a C₁-C₄-acylamino group, R¹⁴ denotes a halogen atom, a C₁-C₁₂-alkyl group, a C₁-C₁₂-alkoxy group, a C₁-C₄-alkylamino group or a C₁-C₄-acylamino group and X has the abovementioned meaning,
where the oligomer, in the oxidized form, is completely soluble in dipolar aprotic solvents or solvent mixtures at 25°C, and solutions having a content of at least 0.5 g of the oligomer in 100 ml of solvent or solvent mixtures obtained at 25°C, and 10 to 90% by weight of a polymer which is dissolved or swollen in solvents having a δ_{P} value greater than 3.5 (cal/ccm)^{½} and a δ_{H} value less than 6.5 (cal/ccm)^{½}, which comprises dissolving the oligomer and the polymer together in a solvent having a δ_{P} value greater than 3.5 (cal/ccm)^{½} and a δ_{H} value less than 6.5 (cal/ccm)^{½} and recovering the mixture from the solvent.

2. The process as claimed in claim 1, wherein the oligomer and the polymer are dissolved or swollen in solvents or solvent mixtures having a δ_{P} value greater than 5.5 (cal/ccm)^{½} and a δ_{H} value less than 5.0 (cal/ccm)^{½}.

3. The process as claimed in claim 1, wherein the polymer is poly(vinyl acetal), poly(vinyl acetate), poly(maleic anhydride), poly-N-vinylpyrrolidone, poly-4-vinyl-pyridine, poly(methyl methacrylate), poly(ethyl methacrylate), polyacrolein, polyformaldehyde, poly(ethylene oxide), poly(propylene oxide), cellulose acetate, styrene-acrylonitrile copolymers, polyacrylonitrile, polymethacrylonitrile, poly(vinyl chloride), poly(vinylidene fluoride), poly-N-vinylcarbazole, poly-N-vinylacetamide, poly(acrylic anhydride), poly(ethylene carbonate) or poly-ε-caprolactam.

4. The use of a coating composition produced as claimed in claim 1, for the production of electroconductive coatings on nonconductive and semiconductive materials.

5. A plastic film coated with a coating composition as claimed in claim 1.

6. A solution containing an electroconductive coating composition, wherein it contains from 0.1 to 20% by weight of the coating composition as claimed in claim 1 dissolved in 80 to 99.9% by weight of a dipolar aprotic solvent or solvent mixture which has a δ_{P} value greater than 3.5 (cal/ccm)^{½} and a δ_{H} value less than 6.5 (cal/ccm)^{½}.

## Revendications (Revendications pour l'(les) Etat(s) contractant(s) suivant(s): AT, BE, CH, DE, FR, GB, GR, IT, LI, LU, NL, SE)

1. Composition de revêtement électroconductrice constituée par
10 à 90 % en masse d'un oligomère de trois à dix unités constitutives, qui sont liées entre elles par des liaisons en position 2 et/ou en position 5, constitué en moyenne statistique de
60 à 100 % en masse d'unités constitutives dérivant d'au moins un monomère de formule (I) 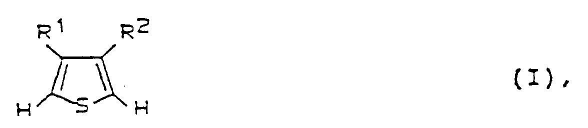 dans laquelle
R¹ représente un groupe alcoxy en C₁-C₁₂ ou -O(CH₂CH₂O)ₙCH₃ avec n = 1 à 4 et
R² représente un atome d'hydrogène, un groupe alkyle en C₁-C₁₂, un groupe alcoxy en C₁-C₁₂ ou -O(CH₂CH₂O)ₙCH₃ avec n = 1 à 4, ou bien R¹ et R² ensemble représentent -O(CH₂)ₘ-CH₂- ou -O(CH₂)ₘ-O-, où m = 1 à 12,
0 à 40 % en masse d'unités constitutives dérivant d'au moins un monomère de formule (II) 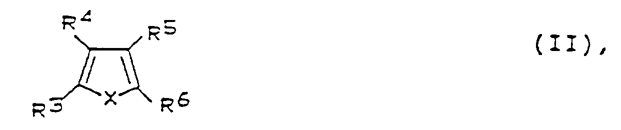 dans laquelle R⁴ et R⁵ représentent indépendamment l'un de l'autre un atome d'hydrogène, un atome d'halogène, un groupe alkyle en C₁-C₁₂ ou aryle, ou bien forment ensemble, avec les atomes de carbone auxquels ils sont liés, un noyau aromatique,
R³ et R⁶ représentent indépendamment l'un de l'autre un atome d'hydrogène, ou bien R³ et R⁴, avec les atomes de carbone auxquels ils ont liés, ou R⁵ et R⁶, avec les atomes de carbone auxquels ils sont liés, forment respectivement ensemble un noyau aromatique,
X représente un atome d'oxygène, un atome de soufre, un groupe =NH, un groupe =N-alkyle ou un groupe =N-aryle,
0 à 40 % en masse d'unités constitutives dérivant d'au moins un monomère de formule (III) 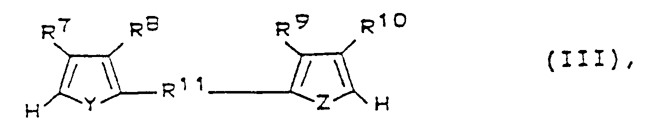 dans laquelle R⁷, R⁸, R⁹ et R¹⁰ représentent indépendamment l'un de l'autre un atome d'hydrogène, un groupe alkyle en C₁-C₁₂, un groupe alcoxy en C₁-C₁₂ ou un groupe aryle,
Y et Z représentent indépendamment l'un de l'autre un atome d'oxygène, un atome de soufre, un groupe =NH, un groupe =N-alkyle ou un groupe =N-aryle,
R¹¹ représente un groupe arylène, un groupe hétéroarylène ou un système conjugué de formule 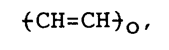 où o est zéro, 1, 2 ou 3,
0 à 40 % en masse d'unités constitutives dérivant d'un monomère de formule (IV) 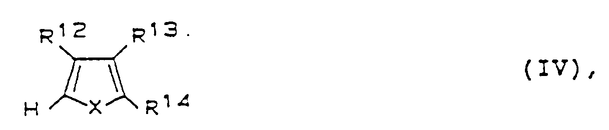 dans laquelle R¹² et R¹³ représentent indépendamment l'un de l'autre un atome d'hydrogène, un atome d'halogène, un groupe alkyle en C₁-C₁₂, un groupe alcoxy en C₁-C₁₂, un groupe alkylamino en C₁-C₄ ou un groupe acylamino en C₁-C₄,
R¹⁴ représente un atome d'halogène, un groupe alkyle en C₁-C₁₂, un groupe alcoxy en C₁-C₁₂, un groupe alkylamino en C₁-C₄ ou un groupe acylamino en C₁-C₄, et X a la signification donnée ci-dessus,
où l'oligomère sous sa forme oxydée est entièrement soluble dans les solvants ou mélanges de solvants aprotiques dipolaires à 25°C, et on obtient des solutions contenant au moins 0,5 g de l'oligomère dans 100 ml de solvant ou de mélange de solvants à 25°C, et par
10 à 90 % en masse d'un polymère qui est soluble ou susceptible de gonfler dans les solvants dont la valeur de δ_{P} est supérieure à 3,5 (cal/cm³)^{½} et la valeur de δ_{H} inférieure à 6,5 (cal/cm³)^{½}.

2. Composition de revêtement selon la revendication 1, caractérisée en ce que l'oligomère et le polymère sont solubles ou susceptibles de gonfler dans les solvants ou mélanges de solvants dont la valeur de δ_{P} est supérieure à 5,5 (cal/cm³)^{½} et la valeur de δ_{H} inférieure à 5,0 (cal/cm³)^{½}.

3. Composition de revêtement selon la revendication 1, caractérisée par le fait que le polymère est le poly(acétal vinylique), le poly(acétate de vinyle), le poly(anhydride maléique), la poly(N-vinylpyrrolidone), la poly(4-vinylpyridine), le poly(méthacrylate de méthyle), le poly(méthacrylate d'éthyle), la polyacroléine, le polyformaldéhyde, le poly(oxyde d'éthylène), le poly(oxyde de propylène), l'acétate de cellulose, les copolymères de styrène et d'acrylonitrile, le polyacrylonitrile, le polyméthacrylonitrile, le poly(chlorure de vinyle), le poly(fluorure de vinylidène), le poly(N-vinylcarbazole), le poly(N-vinylacétamide), le poly(anhydride acrylique), le poly(carbonate d'éthylène) ou le poly(ε-caprolactame).

4. Procédé de préparation de la composition de revêtement selon la revendication 1, caractérisé en ce que l'on dissout ou on fait gonfler ensemble l'oligomère et le polymère dans un solvant dont la valeur de δ_{P} est supérieure à 3,5 (cal/cm³)^{½} et la valeur de δ_{H} inférieure à 6,5 (cal/cm³)^{½}, et en ce que l'on récupère le mélange à partir du solvant.

5. Utilisation de la composition de revêtement selon la revendication 1 pour la préparation de couches électroconductrices sur des matières non conductrices ou semi-conductrices.

6. Feuille en matière plastique revêtue de la composition de revêtement selon la revendication 1.

7. Solution contenant une composition de revêtement électroconductrice, caractérisée en ce qu'elle contient 0,1 à 20 % en masse de la composition de revêtement selon la revendication 1 dissoute dans 80 à 99,9 % en masse d'un solvant ou d'un mélange de solvants aprotiques dipolaires dont la valeur de indice δ_{P} est supérieure à 3,5 (cal/cm³)^{½} et la valeur de δ_{H} inférieure à 6,5 (cal/cm³)^{½}.

## Revendications (Revendications pour l'(les) Etat(s) contractant(s) suivant(s): ES)

1. Procédé de préparation d'une composition de revêtement électroconductrice constituée par
10 à 90 % en masse d'un oligomère de trois à dix unités constitutives, qui sont liées entre elles par des liaisons en position 2 et/ou en position 5, constitué en moyenne statistique de
60 à 100 % en masse d'unités constitutives dérivant d'au moins un monomère de formule (I) 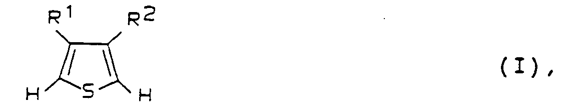 dans laquelle
R¹ représente un groupe alcoxy en C₁-C₁₂ ou -O(CH₂CH₂O)ₙCH₃ avec n = 1 à 4 et
R² représente un atome d'hydrogène, un groupe alkyle en C₁-C₁₂, un groupe alcoxy en C₁-C₁₂ ou -O(CH₂CH₂O)ₙCH₃ avec n = 1 à 4, ou bien R¹ et R² ensemble représentent -O(CH₂)ₘ-CH₂- ou -O(CH₂)ₘ-O-, où m = 1 à 12,
0 à 40 % en masse d'unités constitutives dérivant d'au moins un monomère de formule (II) 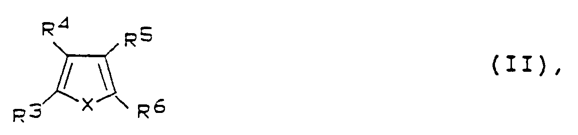 dans laquelle R⁴ et R⁵ représentent indépendamment l'un de l'autre un atome d'hydrogène, un atome d'halogène, un groupe alkyle en C₁-C₁₂ ou aryle, ou bien forment ensemble, avec les atomes de carbone auxquels ils sont liés, un noyau aromatique,
R³ et R⁶ représentent indépendamment l'un de l'autre un atome d'hydrogène, ou bien R³ et R⁴, avec les atomes de carbone auxquels ils ont liés, ou R⁵ et R⁶, avec les atomes de carbone auxquels ils sont liés, forment respectivement ensemble un noyau aromatique,
X représente un atome d'oxygène, un atome de soufre, un groupe =NH, un groupe =N-alkyle ou un groupe =N-aryle,
0 à 40 % en masse d'unités constitutives dérivant d'au moins un monomère de formule (III) 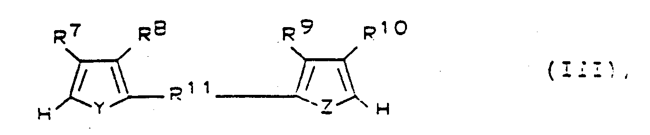 dans laquelle R⁷, R⁸, R⁹ et R¹⁰ représentent indépendamment l'un de l'autre un atome d'hydrogène, un groupe alkyle en C₁-C₁₂, un groupe alcoxy en C₁-C₁₂ ou un groupe aryle,
Y et Z représentent indépendamment l'un de l'autre un atome d'oxygène, un atome de soufre, un groupe =NH, un groupe =N-alkyle ou un groupe =N-aryle,
R¹¹ représente un groupe arylène, un groupe hétéroarylène ou un système conjugué de formule 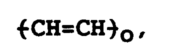 où o est zéro, 1, 2 ou 3,
0 à 40 % en masse d'unités constitutives dérivant d'un monomère de formule (IV) 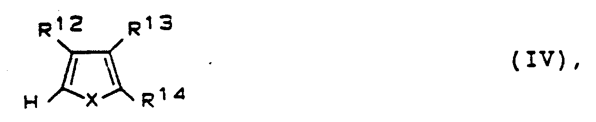 dans laquelle R¹² et R¹³ représentent indépendamment l'un de l'autre un atome d'hydrogène, un atome d'halogène, un groupe alkyle en C₁-C₁₂, un groupe alcoxy en C₁-C₁₂, un groupe alkylamino en C₁-C₄ ou un groupe acylamino en C₁-C₄,
R¹⁴ représente un atome d'halogène, un groupe alkyle en C₁-C₁₂, un groupe alcoxy en C₁-C₁₂, un groupe alkylamino en C₁-C₄ ou un groupe acylamino en C₁-C₄, et X a la signification donnée ci-dessus,
où l'oligomère sous sa forme oxydée est entièrement soluble dans les solvants ou mélanges de solvants aprotiques dipolaires à 25°C, et on obtient des solutions contenant au moins 0,5 g de l'oligomère dans 100 ml de solvant ou de mélange de solvants à 25°C, et par
10 à 90 % en masse d'un polymère qui se dissout ou gonfle dans les solvants dont la valeur de δ_{P} est supérieure à 3,5 (cal/cm³)^{½} et la valeur de δ_{H} inférieure à 6,5 (cal/cm³)^{½}, caractérisé en ce que l'on dissout ou on fait gonfler ensemble l'oligomère et le polymère dans un solvant dont la valeur de δ_{P} est supérieure à 3,5 (cal/cm³)^{½} et la valeur de δ_{H} inférieure à 6,5 (cal/cm³)^{½}, et en ce que l'on récupère le mélange à partir du solvant.

2. Procédé selon la revendication 1, caractérisé en ce que l'on dissout ou l'on fait gonfler l'oligomère et le polymère dans des solvants ou mélanges de solvants dont la valeur de δ_{P} est supérieure à 5,5 (cal/cm³)^{½} et la valeur de δ_{H} inférieure à 5,0 (cal/cm³)^{½}.

3. Procédé selon la revendication 1, caractérisée par le fait que l'on utilise comme polymère du poly(acétal vinylique), du poly(acétate de vinyle), du poly(anhydride maléique), de la poly(N-vinylpyrrolidone), de la poly(4-vinylpyridine), du poly(méthacrylate de méthyle), du poly(méthacrylate d'éthyle), de la polyacroléine, du polyformaldéhyde, du poly(oxyde d'éthylène), du poly(oxyde de propylène), de l'acétate de cellulose, des copolymères de styrène et d'acrylonitrile, du polyacrylonitrile, du polyméthacrylonitrile, du poly(chlorure de vinyle), du poly(fluorure de vinylidène), du poly(N-vinylcarbazole), du poly(N-vinylacétamide), du poly(anhydride acrylique), du poly(carbonate d'éthylène) ou du poly(ε-caprolactame).

4. Utilisation de la composition de revêtement préparée selon la revendication 1 pour la préparation de couches électroconductrices sur des matières non conductrices ou semi-conductrices.

5. Feuille en matière plastique revêtue de la composition de revêtement selon la revendication 1.

6. Solution contenant une composition de revêtement électroconductrice, caractérisée en ce qu'elle contient 0,1 à 20 % en masse de la composition de revêtement selon la revendication 1 dissoute dans 80 à 99,9 % en masse d'un solvant ou d'un mélange de solvants aprotiques dipolaires dont la valeur de δ_{P} est supérieure à 3,5 (cal/cm³)^{½} et la valeur de δ_{H} inférieure à 6,5 (cal/cm³)^{½}.
